Europäisches Patentamt

European Patent Office

Office européen des brevets

(11) Numéro de publication: **0 346 179**
A1

## (12) DEMANDE DE BREVET EUROPEEN

(21) Numéro de dépôt: 89401443.0

(22) Date de dépôt: 26.05.89

(51) Int. Cl.4: **B 23 P 19/00**
B 23 P 19/08

(30) Priorité: 07.06.88 FR 8807528

(43) Date de publication de la demande:
13.12.89 Bulletin 89/50

(84) Etats contractants désignés:
DE ES FR GB IT SE

(71) Demandeur: **RENAULT AUTOMATION**
**8/10 avenue Emile Zola**
**F-92109 Boulogne-Billancourt (FR)**

**ROLAND BAILLY AUTOMATION**
**Rue Bernard Palissy Z.I. Trépillot - B.P. 1103**
**F-25002 Besancon Cédex (FR)**

(72) Inventeur: **Bailly, Roland**
**5, rue Bernard Palissy**
**F-25000 Besançon (FR)**

**Venditti, Bruno**
**35, rue des Moissonneurs**
**F-77550 Moissy Cramayel (FR)**

**Videau, Philippe**
**120, rue Camille Croult**
**F-94400 Vitry (FR)**

(74) Mandataire: **Saint Martin, René et al**
**Régie Nationale des Usines Renault 8 & 10, avenue Emile**
**Zola**
**F-92109 Boulogne Billancourt (FR)**

(54) **Poste autonome pour l'assemblage robotisé de pièces par vissage, destiné aux installations flexibles.**

(57) Suivant l'invention, ce poste d'assemblage comprend :
- un robot (2) avec sa baie de commande,
- un ensemble de distribution (3) composé de :
. un sous-ensemble (14) de distribution d'écrous par bol vibrant,
. un sous-ensemble (12) de distribution de rondelles par bol vibrant,
. un sous-ensemble (16) de sélection d'un équipage rondelle/écrou (22) par superposition,
- une unité (5) de prise et de vissage d'un équipage rondelle/écrou (22),
- un coffret (18) de commande de la distribution et du vissage,
- et un châssis-support (20) rendant le poste autonome.
   **Application** : notamment à l'assemblage robotisé d'unités électriques.

FIG.1

EP 0 346 179 A1

**Description**

**POSTE AUTONOME POUR L'ASSEMBLAGE ROBOTISE DE PIECES PAR VISSAGE, DESTINE AUX INSTALLATIONS FLEXIBLES.**

La présente invention se rapporte aux installations flexibles d'assemblage ; elle vise plus particulièrement un poste autonome pour l'assemblage robotisé de pièces par vissage.

Elle a ainsi pour but essentiel de résoudre les problèmes techniques posés par la distribution, la préhension et le vissage d'un équipage constitué d'une rondelle et d'un écrou.

A cet effet, elle propose un tel poste d'assemblage qui comprend principalement, suivant une particularité essentielle, :
- un robot,
- un ensemble de distribution de rondelles et d'écrous,
- une unité de prise et de vissage d'un équipage rondelle/écrou,
- un coffret de commande de la distribution et du vissage,
- et un châssis-support.

Cette décomposition d'un poste d'assemblage en ensembles et sous-ensembles constitutifs étudiés dans les moindres détails permet d'automatiser entièrement ce poste et de le rendre autonome.

D'autres particularités et avantages de l'invention ressortiront de la description qui suit d'un mode de réalisation préféré, donné à titre d'exemple non limitatif, en référence aux dessins annexés dans lesquels :

- la figure 1 représente une vue en perspective partielle de ce poste montrant une broche de vissage au-dessus d'un dispositif de sélection d'un équipage rondelle-écrou,

- la figure 2 représente une vue analogue à la précédente qui montre cette broche de vissage au-dessus d'une pièce,

- et la figure 3 représente une vue en coupe longitudinale et axiale d'une broche de vissage pourvue d'un nez de prise et de vissage.

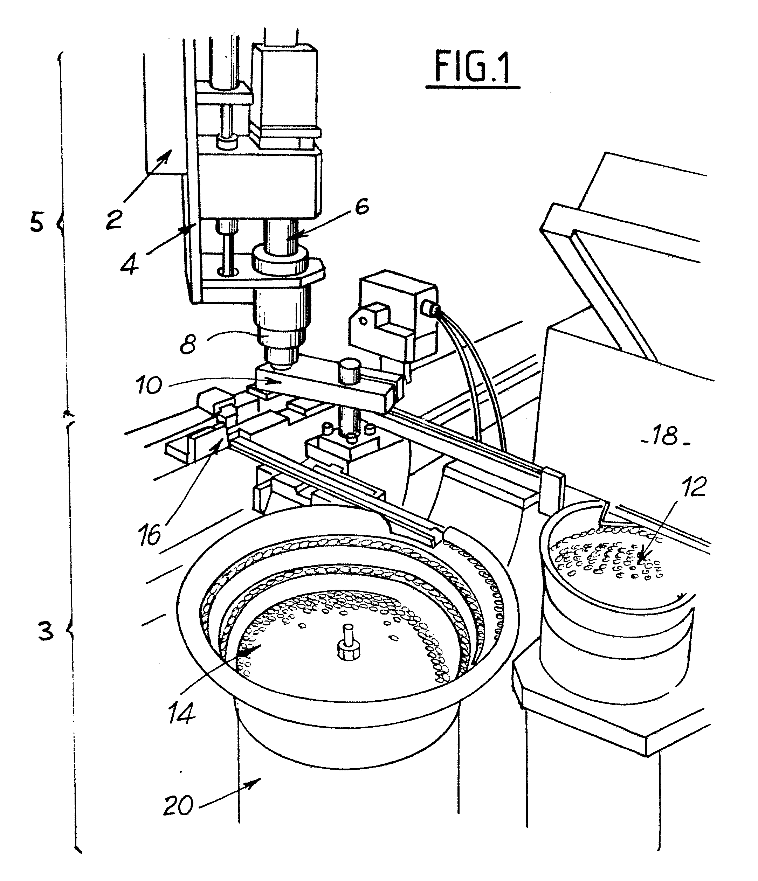

Comme illustré sur la figure 1, un tel poste d'assemblage comprend :
- un robot 2 équipé d'une baie de commande,
- un ensemble de distribution 3 composé de :
. un sous-ensemble 14 de distribution d'écrou par bol vibrant,
. un sous-ensemble 12 de distribution de rondelles par bol vibrant,
. un sous-ensemble 16 de sélection d'un équipage rondelle/écrou par superposition,
- une unité 5 de prise et de vissage d'un équipage rondelle/écrou,
- un coffret 18 de commande de la distribution et du vissage,
- et un châssis-support 20 rendant le poste autonome.

Cette unité 5 de prise et de vissage est constituée par :
- une broche de vissage 6 pourvue d'un système de contrôle de couple,
- un nez 8 fixé en bout de broche pour la prise d'un équipage pré-assemblé 22 rondelle-écou,

- un dispositif 10 de recentrage automatique de la broche de vissage 6,
- et une interface intelligente 4 située entre le bras du robot 2 et la broche de vissage 6.

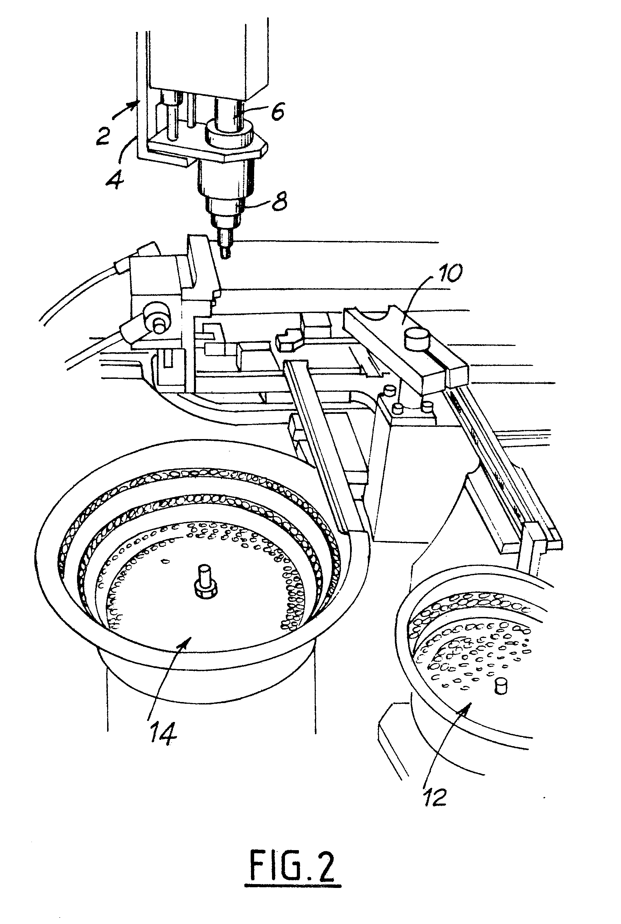

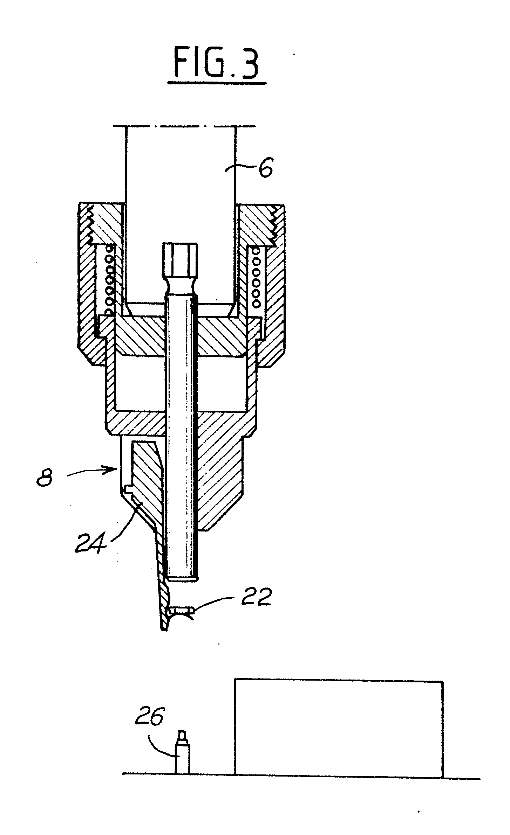

Le poste précédemment décrit fonctionne en référence aux figures 2 et 3 selon un cycle de travail suivant :
- Une rondelle ondulée est distribuée par le sous-ensemble 12 au moyen d'un bol vibrant et d'un rail de guidage.
- Cette rondelle est sélectionnée par un tiroir et indexée a une position fixe.
- Un écrou est distribué par le second sous-ensemble 14 au moyen d'un bol vibrant et d'un rail de guidage.
- Cet écrou est sélectionné par un tiroir et indexé sur cette rondelle à cette position fixe.
- L'unité de vissage est recentrée au-dessus de cette position fixe.
- Par un mouvement combiné vertical du nez 8 muni d'un téléscope additionnel, qui permet l'ouverture et la fermeture des mors 24 à une hauteur déterminée, un équipage pré-assemblé rondelle/écrou 22 est saisi avec une précontrainte de la douille de vissage sur cet équipage rondelle/écrou qui est lui-même indexé par l'intermédiaire d'un doigt de centrage 26 animé par un vérin.
L'unité de vissage est ensuite recentrée dans l'interface robot 4 après cette prise.
- L'équipage rondelle/écrou 22 est maintenu en pression par un système élastique au cours du déplacement du robot 2 vers le point de vissage.
- L'équipage est alors déposé sur une colonnette filetée.
- La rotation de la broche de vissage 6 est enclenchée avant le contact de la douille avec l'écrou pour permettre l'ouverture des mors et la libération progressive de la rondelle et de l'écrou.
- Dès que le couple de vissage est atteint, l'unité de vissage est dégagée, puis recentrée dans l'interface 4.
- Le poste d'assemblage est alors prêt à effectuer un nouveau cycle.

**Revendications**

1. Poste autonome pour l'assemblage robotisé de pièces par vissage, destiné aux installations flexibles et du type comprenant un système de distribution, de préhension et de vissage d'un équipage formé d'une rondelle et d'un écrou, caractérisé par ses principaux éléments constitutifs suivants :
- un robot (2) avec sa baie de commande,
- un ensemble de distribution (3) composé de :
. un sous-ensemble (14) de distribution d'écrous par bol vibrant,
- un sous-ensemble (12) de distribution de rondelles par bol vibrant,

un sous-ensemble (16) de sélection d'un équipage rondelle/écrou par superposition,
- une unité (5) de prise et de vissage d'un équipage rondelle/écrou (22),
- un coffret (18) de commande de la distribution et du vissage,
- et un châssis-support (20) rendant le poste autonome.

2. Poste suivant la revendication 1, caractérisé en ce que l'unité (5) de prise et de vissage d'un équipage rondelle/écrou comporte :
- une broche de vissage (6) avec contrôle de couple,
- un nez (8) fixé en bout de broche pour la prise d'un équipage pré-assemblé rondelle/écrou,
- un dispositif (10) de recentrage automatique de la broche de vissage (6),
- et une interface intelligente (4) entre le bras du robot (2) et la broche de vissage (6).

FIG.1

FIG.2

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 220 (E-341)[1943], 6 septembre 1985; & JP-A-60 076 927 (TOSHIBA K.K.) 01-05-1985 --- | 1 | B 23 P 19/00 B 23 P 19/08 |
| A | US-A-4 270 237 (WESTERN ELECTRIC CO.) * Figures * --- | 1 | |
| A | FR-A-1 523 575 (CLYDE) * Figures * ----- | 1 | |

|  | DOMAINES TECHNIQUES RECHERCHES (Int. Cl.4) |
|---|---|
|  | B 23 P B 25 B |

**Le présent rapport a été établi pour toutes les revendications**

| Lieu de la recherche | Date d'achèvement de la recherche | Examinateur |
|---|---|---|
| LA HAYE | 30-08-1989 | RIS M. |